# EUROPEAN PATENT APPLICATION

(11) **EP 1 804 486 A2**
(43) Date of publication of application: **04.07.2007**
(21) Application number: 06121740.2
(22) Date of filing: 04.10.2006
(51) Int. Cl.: H04N 5/00

(54) **Method of replaying DMB data during DMB service and DMB terminal implementing same**

(30) Priority: 04.10.2005 KR 20050093083
(71) Applicant: Samsung Electronics Co., Ltd., Suwon-si, Gyeonggi-Do (KR)
(72) Inventor: Park, Jin c/o Samsung Electronics Co., Ltd., Gyeonggi-do (KR)
(74) Representative: Grünecker, Kinkeldey, Stockmair & Schwanhäusser Anwaltssozietät

(57) **Abstract**

A method for replaying DMB data and a DMB terminal implementing the same are provided. Part of the DMB data of a real-time DMB service is buffered in a replay buffer. Upon request for a replay during the DMB service, broadcasting data played from a predetermined time granule to a time of the replay request is searched for in the replay buffer and displayed on a display.

## Description

The present invention relates generally to Digital Multimedia Broadcasting (DMB) data, and in particular, to a method of replaying DMB data and a DMB terminal implementing the same.

Typically, digital broadcasting provides enhanced services with high image quality and high voice quality to users, as a substitute for conventional analog broadcasting. Along with the recent development of digital broadcasting technology and mobile communication technology, a digital broadcasting service for viewing digital broadcasting during roaming, particularly DMB service, has attracted much interest. DMB allows users to view multimedia broadcasting on multiple channels through a personal portable receiver or vehicular receiver equipped with an omnidirectional reception antenna.

A DMB-enabled terminal provides real-time broadcasting. With the DMB-enabled terminal, a user can view DMB data provided by a broadcasting station for a rebroadcast, in real time or play back a recording of DMB at a desired time, if the real-time broadcasting was missed. With the recent wide use of the Internet, users access a Video On Demand (VOD) server via the Internet or a mobile communication system, search for intended broadcasting program content, and receive the content by downloading or streaming. In this way, a desired broadcasting channel can be played back. For replay of real-time broadcasting, a server providing a desired broadcasting channel is accessed and searched for an intended broadcasting program.

In the conventional systems, if the user views broadcasting through a wireless DMB terminal outdoors or while moving rather than through a wired device in a stationary state, the user may miss broadcasting. For example, the user cannot concentrate on a broadcasting program, unlike viewing in a stationary state. Thus, the user misses some broadcasting due to distractions and may want to play back the broadcasting.

For replay of broadcasting, however, the user has to wait until a broadcasting station provides its replay. In case of VOD, the VOD service is available after the program ends and then its content is stored on a server. Hence a long time is required. Although the user may record the program during broadcasting for a later replay, the user must decide on a recording time and record. Moreover, the user must wait until the program is completely recorded and is not allowed to selectively play back the program.

As described above, conventionally partial replay of DMB during DMB service is possible only when a broadcasting program of interest ends. Therefore, a viewer is not allowed to immediately play back what he has missed.

The present invention has been designed to substantially solve at least the above problems and/or disadvantages and to provide at least the advantages below. It is the object of the present invention to provide a method of enabling partial replay of DMB during a DMB service and a DMB terminal implementing the same.

This object is solved by the subject matter of the independent claims.

Preferred embodiments are defined in the dependent claims.

According to an aspect of the present invention, there is also provided a method of simultaneously displaying broadcasting in a current service and replaying of the broadcasting upon request for replay during DMB service, and a DMB terminal implementing the same.

According to one aspect of the present invention, in a DMB terminal for replaying broadcasting data during DMB service, a digital broadcasting receiver receives a DMB signal and converts the DMB signal to broadcasting data. A buffer buffers the broadcasting data. A replay buffer buffers the broadcasting data received from the buffer and outputs part of the buffered broadcasting data according to a control signal. A display displays broadcasting data received from the buffer and the replay buffer. A memory stores a time granule for backward search of the broadcasting data buffered in the replay buffer. Upon request for a replay during the DMB service, a controller searches for broadcasting data played from the time granule to a time of the replay request in the replay buffer and controls output of the searched broadcasting data to the display.

According to another aspect of the present invention, in a method of replaying broadcasting data during DMB service, part of DMB data being serviced is buffered in a replay buffer. Upon request for a replay during the DMB service, broadcasting data played from a predetermined time granule to a time of the replay request is searched for in the replay buffer and displayed on a display.

The present invention will become more apparent from the following detailed description when taken in conjunction with the accompanying drawings in which:
FIG. 1 is a block diagram of a DMB terminal according to the present invention;
FIG. 2 is a flowchart illustrating a control operation for replaying broadcasting data upon request for a replay during a broadcasting service according to the present invention;
FIG. 3 is a detailed flowchart illustrating a control operation for replaying a backward searched broadcasting program illustrated in FIG. 2 according to the present invention;
FIGs. 4A, 4B and 4C illustrate a replay buffer for storing broadcasting data for replay according to the present invention; and
FIG. 5 illustrates an exemplary display of current broadcasting concurrent with a replay of broadcasting data during a broadcasting service according to the present invention.

Preferred embodiments of the present invention will be described herein below with reference to the accompanying drawings. In the following description, well-known functions or constructions are not described in detail since they would obscure the invention in unnecessary detail.

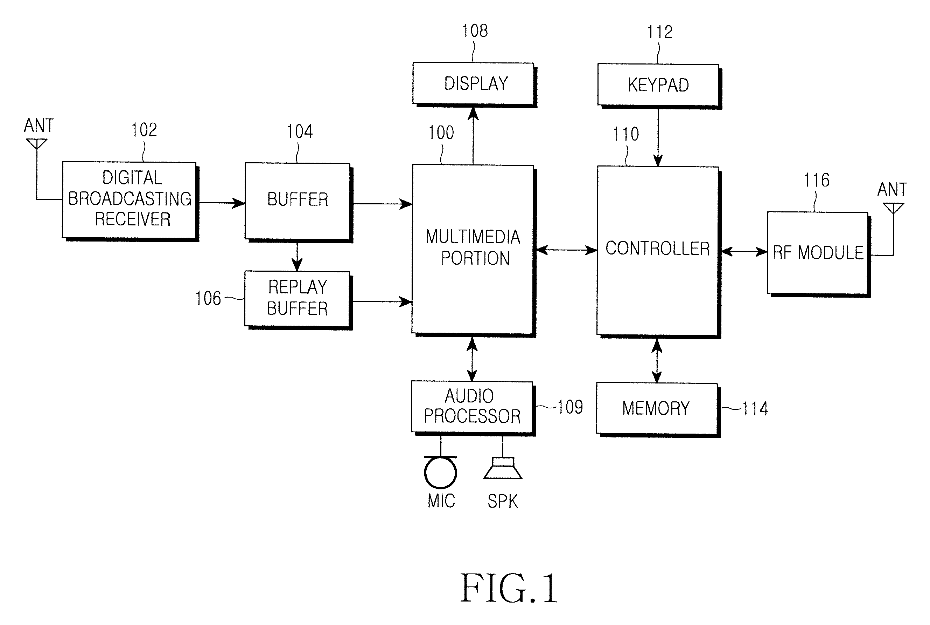

With reference to FIG. 1, the configuration and operation of a DMB terminal according to the present invention will be described. FIG. 1 is a block diagram of the DMB terminal according to the present invention.

Referring to FIG. 1, a controller 110 provides overall control to the DMB terminal. The controller 110 controls simultaneous storing of broadcasting data received from a digital broadcasting receiver 102 in a buffer 104 and a repay buffer 106.

Upon input of a predetermined replay key from a user during broadcasting, the controller 110 retrieves broadcasting data which has been played from a predetermined time to the time of the input of the replay key from the replay buffer 106. According to the number of replay key inputs, the controller 110 calculates the start of a replay of the broadcasting data. Given a unit time of 6 seconds, when the replay key is entered once, the controller 110 controls retrieval of broadcasting data played 6 seconds ago from the time of the replay key input from the replay buffer 106. If the replay key is entered three times, the controller 110 controls retrieval of broadcasting data stored 18 seconds ago from the present from the replay buffer 106.

The controller 110 parses real-time broadcasting data received from the digital broadcasting receiver 102 into video and audio data through the buffer 104 and a multimedia portion 100 and controls output of the video and audio data to a display 108 and a speaker (SPK). Upon request for a replay mode, the controller 110 parses broadcasting data read from the replay buffer 106 into video and audio data and controls output of the video and audio data to the display 108 and the speaker.

In the presence of the replay mode request during DMB service, the controller 110 controls the video of the real-time broadcasting service to be displayed as a main picture and a replay of the broadcasting service as a sub-picture. The main picture and sub-picture can be exchanged according to user setting. That is, the real-time broadcasting video and the replayed video are displayed separately in the main picture and sub-picture by Picture-In-Picture (PIP) technology.

The digital broadcasting receiver 102 demultiplexes digital broadcasting data (hereinafter, broadcasting data) received through an antenna and parses the broadcasting data into video and audio data by decoding.

The buffer 104 includes a video buffer for storing the video data and an audio buffer for storing the audio data.

The replay buffer 106 is configured in the form of a circular buffer and stores replay broadcasting data. The replay broadcasting data is defined as broadcasting data recorded for a predetermined time before the present time, during real-time DMB broadcasting. The size of the replay buffer 106 varies with memory resources allowed by a system. Since DMB data greater than the size of the replay buffer 106 are overwritten, only broadcasting data for a predetermined time within the capacity of the replay buffer 106 can be searched and replayed.

The multimedia portion 100 functions as a controller during the digital broadcasting service. The multimedia portion 100 outputs the video and audio data received from the digital broadcasting receiver 102 to the display 108 and an audio processor 109. The multimedia portion 100 includes a CODEC, particularly a video/audio CODEC for processing live broadcasting data and another video/audio CODEC for processing a replay of broadcasting data according to the present invention. The multimedia portion 100 may have a single CODEC. In this case, only a replay of broadcasting data is output without displaying the real-time broadcasting data as a main picture. If decoded frame buffer data is stored in the replay buffer 106, the real-time broadcasting data can be output as a main picture without using an additional CODEC.

The display 108 displays visual data corresponding to key input from a keypad 112 or visually displays the state of a function set by the user or a function invoked by the user under the control of the controller 110. According to the present invention, the display 108 displays images during broadcasting service, and in replay mode, simultaneously displays real-time broadcasting video and replay broadcasting video using PIP technology under the control of the multimedia portion 100.

The audio processor 109, which is connected to the speaker and a microphone (MIC), converts an audio signal received from the multimedia portion 100 and outputs the converted signal through the speaker. The audio processor 109 also converts an audio signal received from the microphone to audio data and provides the audio data to the multimedia portion 100. Particularly, the audio processor 109 can output audio signals corresponding to different images processed from an audio signal received from the buffer 104 and an audio signal received from the replay buffer 106 by the separated CODECs to the left and right terminals of an earphone, respectively according to the present invention.

The keypad 112 interfaces with the user. The keypad 112 outputs key input data corresponding to a key input. The controller 110 determines which key has been selected from the key input data and correspondingly operates. The keypad 112 includes a backward search key for replay mode in the present invention. An existing key or a separately procured key can be used as the backward search key.

A memory 114 stores information associated with the overall functions of the DMB terminal alongside information associated with broadcasting service. In accordance with the present invention, the memory 114 stores a time granule for searching broadcasting data in the replay buffer 106, upon input of the backward search key. The time granule is a unit of time from which the present time broadcasting data is backward searched at each key input. A Radio Frequency (RF) module 115 exchanges RF signals with a base station via an antenna (ANT) under the control of the controller 110.

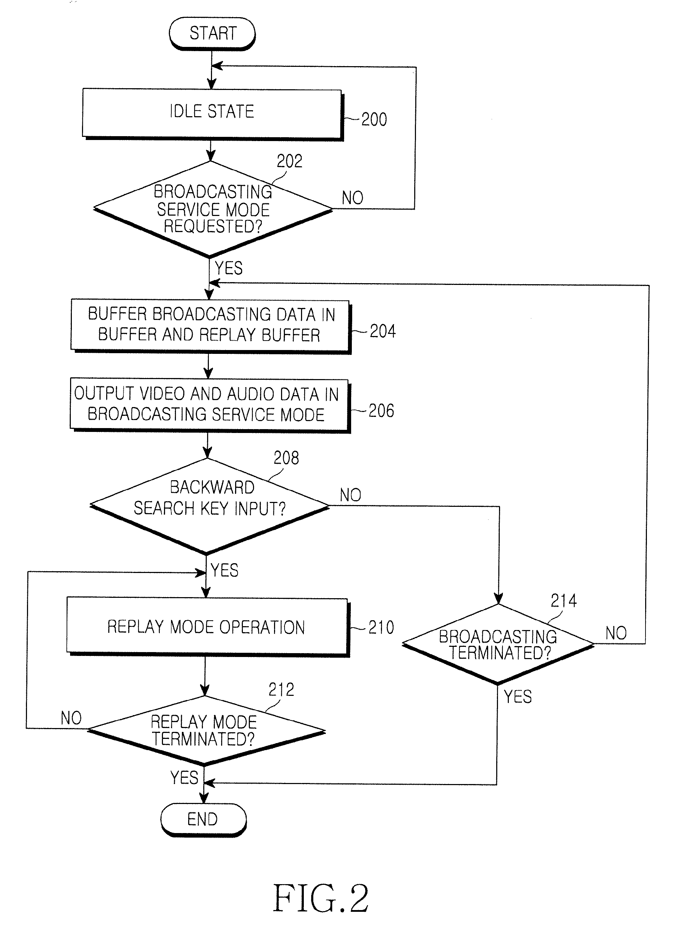

With reference to FIG. 2, a description will be made of an operation for replaying broadcasting data during a digital broadcasting service upon request for a replay in the DMB terminal having the configuration illustrated in FIG. 1. FIG. 2 is a flowchart illustrating a control operation for replaying broadcasting data upon request for a replay during a broadcasting service according to the present invention.

Referring to FIG. 2, the controller 110 maintains an idle state in step 200. Upon receipt of a broadcasting service mode request in step 202, the controller 110 stores real-time broadcasting data in the buffer 104 and the replay buffer 106 in step 204, as the broadcasting data received from the digital broadcasting receiver 102 is parsed into video data and audio data.

In step 206, the controller 110 controls output of data from the buffer 104 to the display 108 and the speaker in the broadcasting service mode. During the data output, the controller 110 monitors reception of the backward search key in step 208.

If the backward search key is not input in step 208, the controller 110 goes to step 214. In step 214, the controller 110 determines whether broadcasting termination is input or not in step 214. If there is an input for a broadcasting termination, broadcasting is terminated, and if there is not an input for broadcasting termination, the controller 110 goes to step 204.

Upon input of the backward search key, the controller 110 transitions to the replay mode in step 210. The replay mode is a mode in which the controller 110 concurrently outputs real-time broadcasting data as a main picture and a replay of broadcasting data stored in the replay buffer 106 a predetermined time granule ago as a sub-picture.

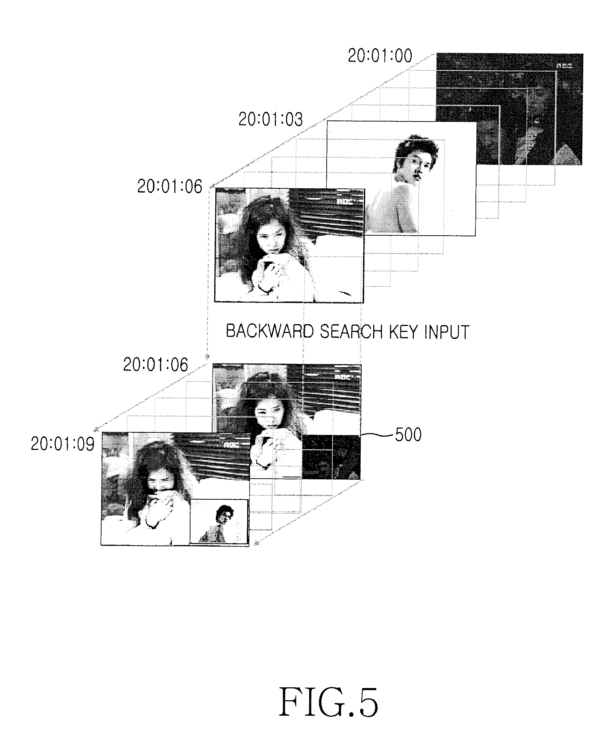

Herein, the time granule is assumed to be 6 seconds. When the backward search key is pressed once, broadcasting data stored from 6 seconds ago to the time of the key input is replayed. When the backward search key is pressed twice, broadcasting data stored 12 seconds ago can be viewed. If broadcasting data played at an intended time was overwritten in the replay buffer 106, data stored earliest in the replay buffer is selected. For example, referring to FIG. 5, when a user has some distraction during real-time DMB broadcasting and returns to the DMB at 20:01:06, the user may be curious about what was going on in the DMB. Then the user enters the backward search key for a replay and views broadcasting data played 6 seconds ago, i.e. at 20:01:00, concurrent with real-time broadcasting, as indicated by reference numeral 500. The user may record the replayed broadcasting data.

In step 212, the controller 110 determines whether the replay mode has been terminated by checking whether the recording time of current replayed broadcasting data reaches the time of the backward search key input. That is, when the backward search key is pressed, broadcasting data from a time granule to the present time is replayed and then the replay mode ends. If the replay mode still progresses, the controller 110 continues the replay in step 210.

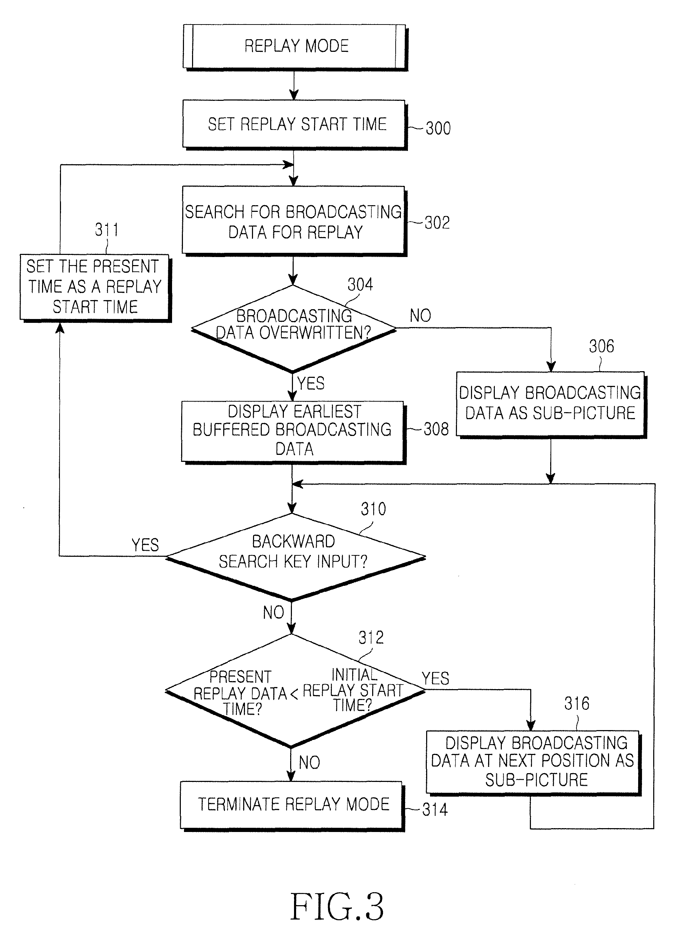

The control operation for step 210 will be detailed below with reference to FIG. 3.

Referring to FIG. 3, when the controller 110 transitions to the replay mode upon input of the reward search key, the controller 110 sets the present time of the backward search key input as a replay start time in step 300, searches for broadcasting data stored from a predetermined time granule to the replay start time in the replay buffer 106 in step 302, and determines whether the replay data was overwritten in step 304.

If the broadcasting data for replay was overwritten, the controller 110 displays broadcasting data stored earliest as a sub-picture in step 308 and goes to step 310. Notably, real-time broadcasting data being serviced is displayed as a main picture concurrently with display of the replay broadcasting data as a sub-picture.

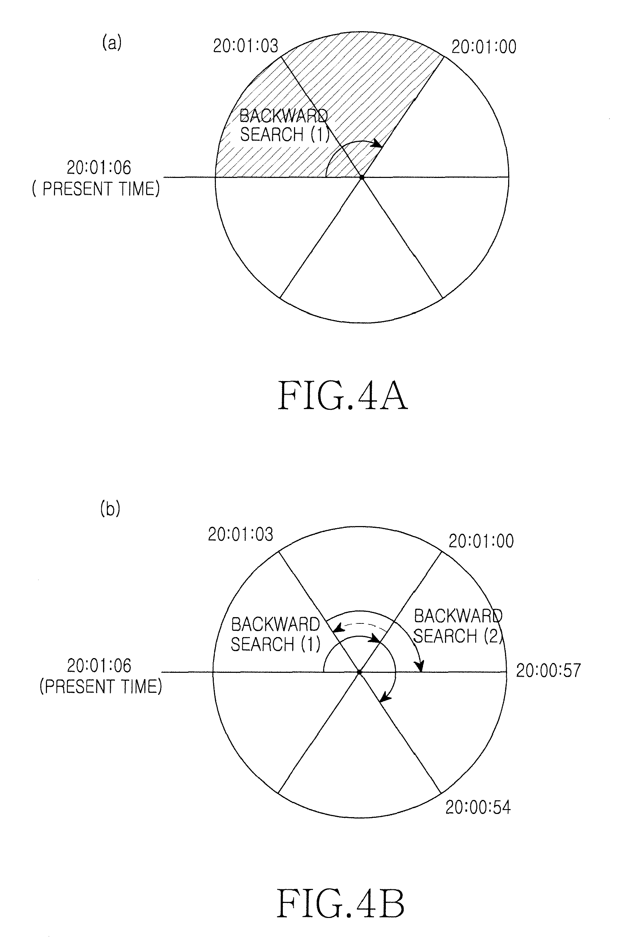

On the other hand, if the replay broadcasting data is in the replay buffer 106 in step 304, the controller 110 displays the broadcasting data stored the predetermined time granule as a sub-picture on the display 108 in step 306 and goes to step 310. For example, referring to FIG. 4A, when the backward search key is entered once at the present time "20:01:06", broadcasting data stored during the period from 20:01:00 to 20:01:06 are replayed.

In step 310, the controller 110 monitors one more input of the backward search key.

Upon input of the backward search key again, the controller 110 sets the present time as a replay start time in step 311 and returns to step 302.

Referring to FIG. 4B, when the backward search key is pressed initially at 20:01:06, broadcasting data played 6 seconds ago is replayed. When the replay runs 3 seconds, the backward search key is pressed one more time at 20:01:03. Then a replay is provided, starting from broadcasting data played 6 seconds before 20:01:03, i.e. at 20:00:57. That is, broadcasting data played 9 seconds before the initial backward search key input can be viewed.

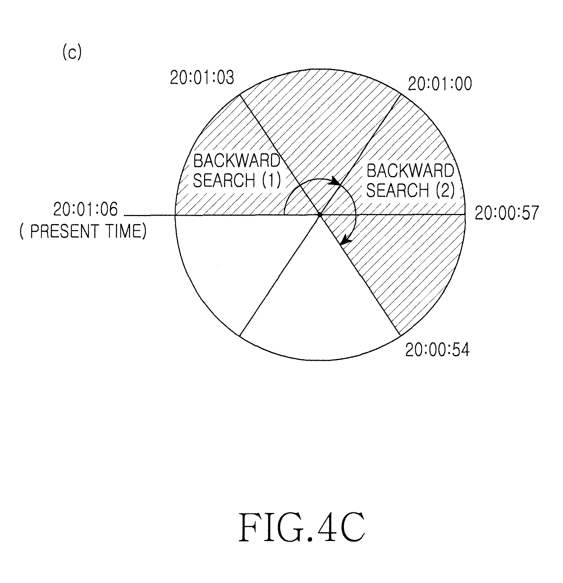

Referring to FIG. 4C, when the backward search key is pressed consecutively at short time intervals, a replay starts with broadcasting data played a predetermined time ago (e.g. number of key inputs x time granule). The replay start time is the first backward search key input time.

In the absence of a backward search key input in step 310, the controller 110 compares the time of currently replayed broadcasting data with the initial replay start time in step 312.

If the time of the current replayed broadcasting data is earlier than the initial replay start time, the controller 110 displays broadcasting data at the next position as a sub-picture in step 316.

If the time of the current replayed broadcasting data is later than the initial replay start time, the controller 110 ends the replay mode in step 314. Then the controller 110 inactivates the sub-picture.

In accordance with the present invention as described above, real-time received broadcasting data is played and a predetermined part of the broadcasting data before the present time is simultaneously buffered in a replay buffer. Upon request for a replay, the buffered broadcasting data is backward searched and the real-time broadcasting data and the replay broadcasting data are simultaneously output on a display. Therefore, a user can view an event of interest during real-time broadcasting. Also, since the use is allowed to record the backward searched broadcasting data, selective recording of some event of interest is possible.

While the invention has been shown and described with reference to certain preferred embodiments thereof, it will be understood by those skilled in the art that various changes in form and details may be made therein without departing from the scope of the invention as defined by the appended claims.

## Claims

1. A digital multimedia broadcasting terminal for replaying broadcasting data during digital multimedia broadcasting service, comprising:
a digital broadcasting receiver for receiving a digital multimedia broadcasting signal and converting the digital multimedia broadcasting signal to broadcasting data;
a buffer for buffering the broadcasting data;
a replay buffer for buffering the broadcasting data received from the buffer and outputting part of the buffered broadcasting data according to a control signal;
a display for displaying at least one of broadcasting data received from the buffer and the replay buffer;
a memory for storing a time granule for conducting a backward search of the broadcasting data buffered in the replay buffer; and
a controller for, upon request for a replay during the digital multimedia broadcasting service, searching for broadcasting data played from the time granule to a time of the replay request in the replay buffer and controlling output of the searched broadcasting data to the display.

2. The digital multimedia broadcasting terminal of claim 1, wherein the replay buffer overwrites broadcasting data beyond a predetermined size.

3. The digital multimedia broadcasting terminal of claim 1 or 2, wherein the controller controls the broadcasting data output from the buffer to be displayed as a main picture and the broadcasting data output from the replay buffer according to the replay request to be displayed as a sub-picture on the display.

4. The digital multimedia broadcasting terminal of one of claims 1 to 3, wherein upon receipt of an additional replay request during replaying the broadcasting data, the controller controls output of broadcasting data played from the time granule before a time of the additional replay request to the time of the initial replay request.

5. A method of replaying broadcasting data during digital multimedia broadcasting service, comprising the steps of:
buffering digital multimedia broadcasting data during a real-time digital multimedia broadcasting service in a replay buffer; and
searching, upon request for a replay during the digital multimedia broadcasting service, for broadcasting data played from a predetermined time granule to a time of the replay request in the replay buffer and displaying the searched broadcasting data on a display.

6. The method of claim 5, wherein the step of buffering the digital multimedia broadcasting data in a replay buffer comprises the step of buffering the digital multimedia broadcasting data in the replay buffer and overwriting broadcasting data beyond the size of the replay buffer.

7. The method of claim 5 or 6, wherein the displaying step comprises simultaneously displaying the broadcasting data being serviced as a main picture and displaying the searched broadcasting data as a sub-picture.

8. The method of one of claims 5 to 7, further comprising, upon receipt of an additional replay request during displaying the searched broadcasting data, displaying broadcasting data played from the time granule before a time of the additional replay request to the time of the initial replay request as the sub-picture.

9. A digital multimedia broadcasting terminal for replaying broadcasting data during digital multimedia broadcasting service, comprising:
a replay buffer for buffering received broadcasting data; and
a controller for, upon request for a replay, searching for broadcasting data played from the time granule to a time of the replay request in the replay buffer and controlling the searched broadcasting data to be displayed.

10. The digital multimedia broadcasting terminal of claim 9, further comprising:
a buffer for buffering the broadcasting data in real time; and
a memory for storing a time granule for backward search of the broadcasting data buffered in the replay buffer.

11. The digital multimedia broadcasting terminal of claim 9 or 10, wherein the replay buffer overwrites broadcasting data beyond a predetermined size.

12. The digital multimedia broadcasting terminal of one of claims 9 to 11, wherein upon receipt of an additional replay request during replaying the broadcasting data, the controller controls broadcasting data played from the time granule before a time of the additional replay request to the time of the initial replay request to be displayed.

13. The digital multimedia broadcasting terminal of one of claims 9 to 12, wherein the controller controls the broadcasting data output from the buffer to be displayed as a main picture and the broadcasting data output from the replay buffer according to the replay request to be displayed as a sub-picture on the display.
